# EUROPEAN PATENT SPECIFICATION

(11) **EP 3 236 577 B1**
(45) Date of publication and mention of the grant of the patent: **13.05.2020**
(21) Application number: 17162910.8
(22) Date of filing: 24.03.2017
(51) Int. Cl.: H02M 7/49, H02J 3/38, H02M 1/00, H02M 1/32

(54) **CASCADED H-BRIDGE INVERTER AND METHOD FOR HANDLING FAULT THEREOF**
KASKADIERTER H-BRÜCKEN-WECHSELRICHTER UND VERFAHREN ZUR FEHLERHANDHABUNG DAFÜR
INVERSEUR À PONT EN H EN CASCADE ET SON PROCÉDÉ DE MANIPULATION D'ANOMALIE

(30) Priority: 22.04.2016 CN 201610264219
(43) Date of publication of application: 25.10.2017
(73) Proprietor: Sungrow Power Supply Co., Ltd., Hefei, Anhui 230088 (CN)
(72) Inventor: XU, Jun, Hefei, Anhui 230088 (CN); GU, Yilei, Hefei, Anhui 230088 (CN)
(74) Representative: Zacco Patent- und Rechtsanwalts GmbH

(56) References cited:
- EP-A1- 2 312 639
- CN-A- 102 403 888
- US-A1- 2015 340 964
- US-A1- 2016 006 251
- ALONSO O ET AL: "Cascaded h-bridge multilevel converter for grid connected photovoltaic generators with independent maximum power point tracking of each solar array", PESC'03. 2003 IEEE 34TH. ANNUAL POWER ELECTRONICS SPECIALISTS CONFERENCE. CONFERENCE PROCEEDINGS. ACAPULCO, MEXICO, JUNE 15 - 19, 2003; [ANNUAL POWER ELECTRONICS SPECIALISTS CONFERENCE], NEW YORK, NY :; IEEE, US, vol. 2, 15 June 2003 (2003-06-15), pages 731-735, XP010648900, DOI: 10.1109/PESC.2003.1218146 ISBN: 978-0-7803-7754-7
- RIVERA S ET AL: "Cascaded H-bridge multilevel converter topology and three-phase balance control for large scale photovoltaic systems", POWER ELECTRONICS FOR DISTRIBUTED GENERATION SYSTEMS (PEDG), 2012 3RD IEEE INTERNATIONAL SYMPOSIUM ON, IEEE, 25 June 2012 (2012-06-25), pages 690-697, XP032226637, DOI: 10.1109/PEDG.2012.6254077 ISBN: 978-1-4673-2021-4

## Description

### TECHNICAL FIELD

The present disclosure relates to the technical field of power electronics, and in particular to a cascaded H-bridge inverter and a method for handling a fault thereof.

### BACKGROUND

In recent years, the cascaded multi-level topology has been widely used by virtue of its excellent performance. Among all cascaded multi-level topologies, the cascaded H-bridge topology is favored due to its modular structure, simple layout, few components required to achieve the same number of levels and high system reliability.

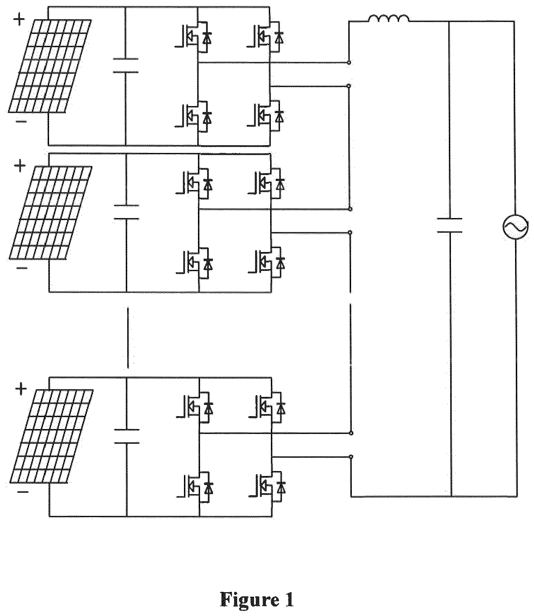

A system structure of a current cascaded H-bridge inverter is as shown in Figure 1. In a normal operation, solar modules are connected in parallel with the direct current side of the cascaded H-bridge inverter, and transfer the energy in the direct current side to a power grid via the cascaded H-bridge inverter. However, when a solar panel is seriously blocked or fails to work, a voltage across the solar panel will be significantly reduced, so that a voltage in the direct current side of the H-bridge inverter drops simultaneously, thereby affecting the normal operation of the system.

In the conventional technology, the corresponding H-bridge module is generally bypassed, and the remaining H-bridge modules are configured for grid-connected power generation. However, if the redundancy of the number of H-bridges cascaded in the overall system is insufficient, a total output modulation voltage of the cascaded H-bridge inverter will be reduced, and the system cannot operate stably, so that those intact solar panels are not be able to transfer energy to the power grid, thereby resulting in a significant loss of power generation.

In the patent US2015/0340964A1, A storage apparatus with which billing amounts in the case of write count-dependent billing can be predicted, comprises a physical storage device which provides logical volumes of different types, and a controller which executes I/O control by classifying each of the logical volumes of different types into tiers of different response performances. In a case where a write request is issued to any virtual page which configures the virtual volume, the controller assigns any real page which configures a logical volume to the virtual page, writes data to the real page, and performs a write count. The controller calculates a billing amount per fixed time interval on the basis of the performed write count, calculates tier ranges so that the billing amount per fixed time interval does not exceed the billing upper limit value, and relocates the real page on the basis of the calculated tier range.

### SUMMARY

In view of the above, a cascaded H-bridge inverter and a method for handling a fault thereof are provided according to the present disclosure, to solve the problem of a loss of power generation caused by insufficient redundancy of the number of cascaded H-bridges.

To achieve the object, the technical solutions of the present disclosure are provided in the following.

A method for handling a fault of a cascaded H-bridge inverter is provided according to the present disclosure, which is applied to a cascaded H-bridge inverter. The cascaded H-bridge inverter is connected to N solar panels. The cascaded H-bridge inverter includes N capacitors, N H-bridge modules, N switching devices and a controller, where N is a positive integer. The method includes detecting, by the controller, an output voltage or an output power of each of the N solar panels. The method further includes determining, by the controller, whether the output voltage of at least one of the N solar panels is lower than a preset voltage, or whether the output power of at least one of the N solar panels is lower than a preset power. The method further includes controlling a corresponding one of the N switching devices to be switched off and changing a set value of a voltage across a corresponding one of the N capacitors in the direct current side by the controller in a case that the output voltage of at least one of the N solar panels is lower than the preset voltage, or that the output power of at least one of the N solar panels is lower than the preset power. The method further includes controlling, by the controller, a corresponding one of the N H-bridge modules to perform inverting by taking the set value of the voltage across the capacitor in the direct current side as an input value, so that a total output modulation voltage of the cascaded H-bridge inverter meets a preset condition. Preferably, the process of the controlling the corresponding switching device to be switched off and changing the set value of the voltage across the corresponding capacitor in the direct current side by the controller may include controlling, by the controller, the corresponding switching device to be switched off, and controlling, by the controller, the set value of the voltage across the corresponding capacitor in the direct current side to be raised, wherein the set value is raised to a value calculated based on the total output modulation voltage, which is needed by the cascaded H-bridge inverter to meet the preset condition, and wherein each H-bridge module corresponding to a switching device that is still switched on performs inverting based on a Maximum Power Point Tracking, MPPT, control strategy.

Preferably, after the process of the controlling, by the controller, the corresponding H-bridge module to perform inverting by taking the set value of the voltage across the capacitor in the direct current side as the input value, the method may further include determining, by the controller, whether the output voltage of at least one of the N solar panels is higher than the preset voltage, or whether the output power of at least one of the N solar panels is higher than the preset power, and controlling a corresponding one of the N H-bridge modules to perform inverting based on a Maximum Power Point Tracking (MPPT) control strategy and controlling a corresponding one of the N switching devices to be switched on by the controller in a case that the output voltage of at least one of the N solar panels is higher than the preset voltage, or that the output power of at least one of the N solar panels is higher than the preset power.

Preferably, before the process of the controlling the corresponding switching device to be switched off and changing the set value of the voltage across the corresponding capacitor in the direct current side by the controller, the method may further include determining, by the controller, whether the cascaded H-bridge inverter is normally connected to the N solar panels, controlling, by the controller, the cascaded H-bridge inverter to enter into an operating state, in a case that the cascaded H-bridge inverter is normally connected to the N solar panels, and controlling, by the controller, the N switching devices to be switched on.

A cascaded H-bridge inverter is provided according to the present disclosure. The cascaded H-bridge inverter is connected to N solar panels. The cascaded H-bridge inverter includes N capacitors, N H-bridge modules, N switching devices and a controller, where N is a positive integer. One output terminal of each of the N solar panels is connected to one input terminal of one of the N H-bridge modules via one of the N switching devices. The other output terminal of each of the N solar panels is connected to the other input terminal of one of the N H-bridge modules. Two input terminals of each of the N H-bridge modules are connected across a corresponding one of the N capacitors. Output terminals of the N H-bridge modules are connected in series. The controller is respectively connected to the N switching devices, the N capacitors and the N H-bridge modules. The controller is configured to detect an output voltage or an output power of each of the N solar panels, control a corresponding one of the N switching devices to be switched off and change a set value of a voltage across a one of the N capacitor sin the direct current side in a case that the output voltage of at least one of the N solar panels is lower than a preset voltage, or that the output power of at least one of the N solar panels is lower than a preset power. The controller is further configured to control a corresponding one of the N H-bridge modules to perform inverting by taking the set value of the voltage across the capacitor in the direct current side as an input value, so that a total output modulation voltage of the cascaded H-bridge inverter meets a preset condition. Preferably, the controller may be configured to control the corresponding switching device to be switched off and changing the set value of the voltage across the corresponding capacitor in the direct current side by controlling the corresponding switching device to be switched off, and controlling the set value of the voltage across the corresponding capacitor in the direct current side to be raised, wherein the set value is calculated based on the total output modulation voltage, which is needed by the cascaded H-bridge inverter to meet the preset condition, and wherein each H-bridge module corresponding to a switching device that is still switched on performs inverting based on a Maximum Power Point Tracking, MPPT, control strategy.

Preferably, the controller may be further configured to control a corresponding one of the N H-bridge modules to perform inverting based on a maximum power point tracking (MPPT) control strategy and control a corresponding one of the N switching devices to be switched on, in a case that the output voltage of at least one of the N solar panels is higher than the preset voltage, or that the output power of at least one of the N solar panels is higher than the preset power.

Preferably, the controller may be further configured to determine whether the cascaded H-bridge inverter is normally connected to the N solar panels, control the cascaded H-bridge inverter to enter into an operating state, in a case that the cascaded H-bridge inverter is normally connected to the N solar panels, and control the N switching devices to be switched on after the cascaded H-bridge inverter enters into the operating state.

Preferably, each of the N switching devices may include a diode and a full control switch. An anode of the diode may be connected to a positive electrode of a corresponding one of the N solar panels, and a cathode of the diode may be connected to a corresponding one of the N capacitors and a corresponding one of the N H-bridge modules. Alternatively, a cathode of the diode may be connected to a negative electrode of a corresponding one of the N solar panels, and an anode of the diode may be connected to a corresponding one of the N capacitors and a corresponding one of the N H-bridge modules. The full control switch may be connected in parallel with the diode.

Preferably, the full control switch may be a relay or a semiconductor device.

Based on the method for handling a fault of a cascaded H-bridge inverter according to the present disclosure, the output voltage or the output power of each of the N solar panels is detected by the controller. In a case that the output voltage of at least one of the N solar panels is lower than the preset voltage, or that the output power of at least one of the N solar panels is lower than the preset power, the controller controls the corresponding switching device to be switched off, and changes the set value of the voltage across the corresponding capacitor in the direct current side. Then, the controller controls the corresponding H-bridge module to perform inverting by taking the set value of the voltage across the capacitor in the direct current side as the input value, so that the total output modulation voltage of the cascaded H-bridge inverter meets the preset condition, which avoids that the system cannot operate normally and stably and ensures that an intact solar panel can transfer energy to a power grid. Therefore, a significant loss of power generation is avoided.

### BRIEF DESCRIPTION OF THE DRAWINGS

To illustrate technical solutions according to embodiments of the present disclosure or in the conventional technologies more clearly, drawings to be used in the descriptions of the embodiments or the conventional technologies are described briefly hereinafter. Apparently, the drawings described hereinafter are only for some embodiments of the present disclosure, and other drawings may be obtained by those skilled in the art based on those drawings without creative efforts.
Figure 1 is a schematic structural diagram of a conventional cascaded H-bridge inverter;
Figure 2 is a flow chart of a method for handling a fault of a cascaded H-bridge inverter according to an embodiment of the present disclosure;
Figure 3 is a flow chart of a method for handling a fault of a cascaded H-bridge inverter according to another embodiment of the present disclosure;
Figure 4 is a flow chart of a method for handling a fault of a cascaded H-bridge inverter according to another embodiment of the present disclosure;
Figure 5 is a schematic structural diagram of a cascaded H-bridge inverter according to an embodiment of the present disclosure; and
Figure 6 is a schematic diagram of a control strategy of an H-bridge module according to an embodiment of the present disclosure.

### DETAILED DESCRIPTION OF THE EMBODIMENTS

Technical solutions of the embodiments of the present disclosure are illustrated clearly and completely in conjunction with drawings of the embodiments of the present disclosure. Apparently, the described embodiments are merely a few rather than all of the embodiments of the present disclosure. All other embodiments obtained by those skilled in the art based on the embodiments of the present disclosure without creative efforts shall fall within the protection scope of the present disclosure.

A method for handling a fault of a cascaded H-bridge inverter is provided according to the present disclosure, to solve the problem of a loss of power generation caused by insufficient redundancy of the number of cascaded H-bridges in the conventional art.

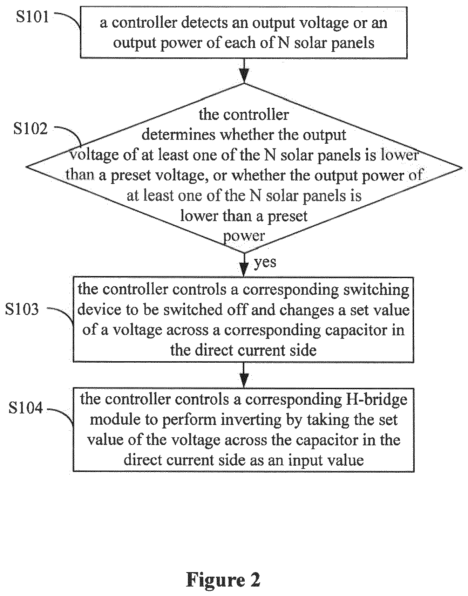

Specifically, the method for handling a fault of a cascaded H-bridge inverter is applied to a cascaded H-bridge inverter. The cascaded H-bridge inverter is connected to N solar panels. The cascaded H-bridge inverter includes N capacitors, N H-bridge modules, N switching devices and a controller, where N is a positive integer. The method for handling a fault of a cascaded H-bridge inverter is as shown in Figure 2 and includes steps S101 to S104.

In step S101, the controller detects an output voltage or an output power of each of the N solar panels.

When the cascaded H-bridge inverter is in a normal operating state, the controller controls the N H-bridge modules to perform inverting based on a maximum power point tracking (MPPT) control strategy based on the output voltage or the output power. When one of the N solar panels is seriously blocked or fails to work, the output voltage and the output power of the solar panel will be significantly reduced, so that a voltage in the direct current side of the corresponding H-bridge inverter drops simultaneously, thereby affecting the normal operation of the system.

In step S102, the controller determines whether the output voltage of at least one of the N solar panels is lower than a preset voltage, or whether the output power of at least one of the N solar panels is lower than a preset power.

In step S103, in a case that the output voltage of at least one of the N solar panels is lower than the preset voltage, or that the output power of at least one of the N solar panels is lower than the preset power, the controller controls a corresponding switching device to be switched off and changes a set value of a voltage across a corresponding capacitor in the direct current side, which equivalently bypasses the solar panel which is seriously blocked or fails to work, thus, the solar panel cannot output a voltage to the corresponding H-bridge module. In this case, the controller changes the set value of the voltage across the corresponding capacitor in the direct current side. To ensure the cascaded H-bridge inverter to operate stably, the set value of the voltage across the capacitor in the direct current side is preferably higher than the output voltage of the solar panel.

In step S104, the controller controls a corresponding H-bridge module to perform inverting by taking the set value of the voltage across the capacitor in the direct current side as an input value, so that a total output modulation voltage of the cascaded H-bridge inverter meets a preset condition.

The corresponding H-bridge module performs inverting by taking the set value of the voltage across the capacitor in the direct current side as the input value, so that it is ensured that the corresponding H-bridge module can provide a certain output voltage in a case that the solar panel is seriously blocked or fails to work, and thus that the total output modulation voltage of the cascaded H-bridge inverter meets the preset condition of grid-connected power generation of the cascaded H-bridge inverter, thereby ensuring that the cascaded H-bridge inverter operates stably.

Based on the method for handling a fault of a cascaded H-bridge inverter according to the embodiment, in a case that the output voltage of at least one of the N solar panels is lower than the preset voltage, or that the output power of at least one of the N solar panels is lower than the preset power, the controller controls the corresponding switching device to be switched off, and changes the set value of the voltage across the capacitor in the direct current side. Then, the controller controls the corresponding H-bridge module to perform inverting by taking the set value of the voltage across the capacitor in the direct current side as the input value, so that the total output modulation voltage of the cascaded H-bridge inverter meets the preset condition of grid-connected power generation of the cascaded H-bridge inverter, which avoids that the system cannot operate normally and stably and ensures that an intact solar panel can transfer energy to a power grid. Therefore, a significant loss of power generation is avoided.

Preferably, step S103 includes controlling, by the controller, the corresponding switching device to be switched off, and controlling, by the controller, the set value of the voltage across the corresponding capacitor in the direct current side to be raised.

In a case that the output voltage of at least one of the N solar panels is lower than the preset voltage, or that the output power of at least one of the N solar panels is lower than the preset power, the controller may compute the set value of the voltage across the corresponding capacitor in the direct current side, based on the total output modulation voltage needed by the cascaded H-bridge inverter to meet the preset condition. The controller controls the corresponding H-bridge module to perform inverting by taking the raised set value of the voltage across the capacitor (greater than the output voltage of the solar panel) as the input value, to make the total output modulation voltage of the cascaded H-bridge inverter meet the preset condition of grid-connected power generation of the cascaded H-bridge inverter.

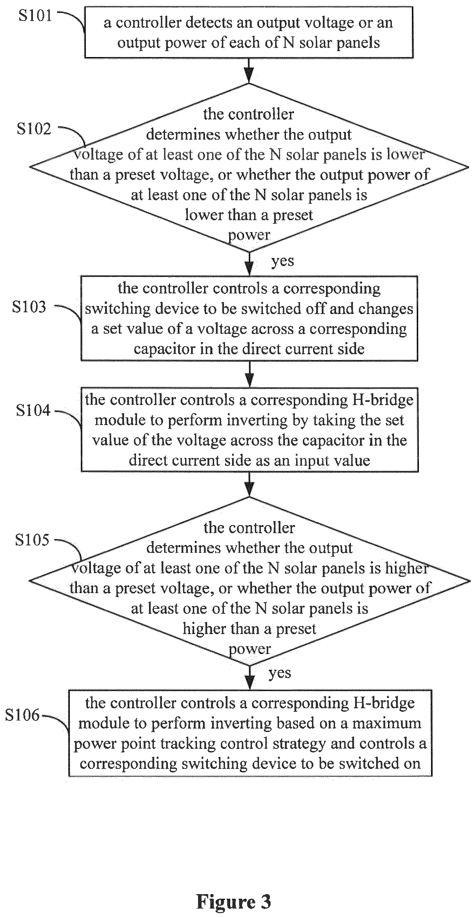

Preferably, as shown in Figure 3, after step S104, the method further includes steps S105 and S106.

In step S105, the controller determines whether the output voltage of at least one of the N solar panels is higher than the preset voltage, or whether the output power of at least one of the N solar panels is higher than the preset power.

In step S106, in a case that the output voltage of at least one of the N solar panels is higher than the preset voltage, or that the output power of at least one of the N solar panels is higher than the preset power, the controller controls a corresponding H-bridge module to perform inverting based on a maximum power point tracking (MPPT) control strategy and controls a corresponding switching device to be switched on.

To make the total output modulation voltage of the cascaded H-bridge inverter meet the preset condition, the solar panel which is seriously blocked or fails to work is equivalently bypassed, and the corresponding H-bridge module performs inverting by taking the set value of the voltage across the capacitor in the direct current side as the input value. The controller determines the detected output voltage and output power of each of the N solar panels. In a case that the output voltage of at least one of the N solar panels is higher than the preset voltage, or that the output power of at least one of the N solar panels is higher than the preset power, it indicates that the equivalently bypassed solar panel restores to the normal operating state and can provide the output voltage meeting the requirement. In this case, the controller may control the corresponding H-bridge module to restore to the normal operating state in which the H-bridge module performs inverting based on the MPPT control strategy, and the controller may control the corresponding switching device to be switched on.

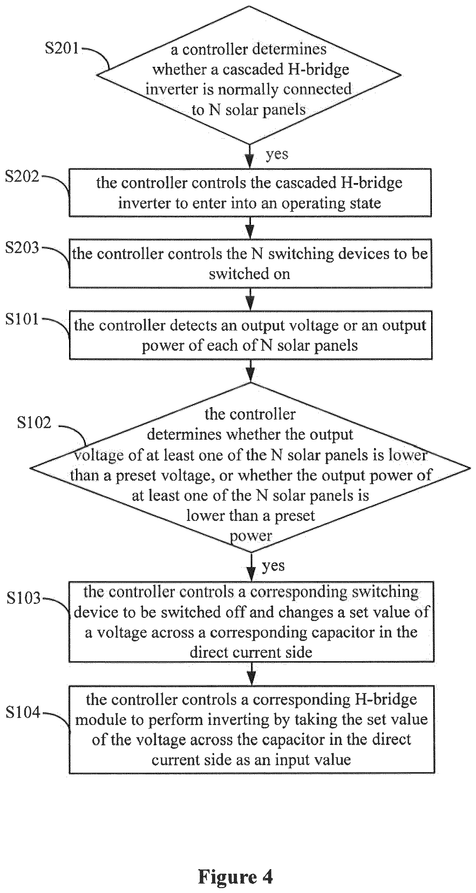

Preferably, as shown in Figure 4, before step S103, the method further includes steps S201 to S203.

In step S201, the controller determines whether the cascaded H-bridge inverter is normally connected to the N solar panels.

In step S202, in a case that the cascaded H-bridge inverter is normally connected to the N solar panels, the controller controls the cascaded H-bridge inverter to enter into an operating state.

In step S203, after the cascaded H-bridge inverter enters into the operating state, the controller controls the N switching devices to be switched on.

As shown in Figure 4, step S203 is performed before step S101. However, Figure 4 is merely an example, and step S203 may be performed in other order, as long as step S203 is performed before step S103, which is not specifically limited herein, all of which is within the scope of the present application.

Preferably, each of the N switching devices includes a diode and a full control switch. An anode of the diode is connected to a positive electrode of a corresponding solar panel, and a cathode of the diode is connected to a corresponding capacitor and a corresponding H-bridge module. Alternatively, the cathode of the diode is connected to a negative electrode of a corresponding solar panel, and the anode of the diode is connected to a corresponding capacitor and a corresponding H-bridge module. The full control switch is connected in parallel with the diode.

Preferably, the full control switch is a relay or a semiconductor device.

The switching device includes the diode and the full control switch. In a case that controller determines that the cascaded H-bridge inverter is normally connected to the N solar panels, the diode may play a role of anti-reverse connection.

After controlling the cascaded H-bridge inverter to enter into the operating state, the controller controls the N switching devices to be switched on, and may bypass the diode to reduce a voltage drop loss of the diode in an on-state.

In a case that the output voltage of at least one of the N solar panels is lower than the preset voltage, or that the output power of at least one of the N solar panels is lower than the preset power, the controller controls the full control switch in the corresponding switching device to be switched off, and changes the set value of the voltage across the corresponding capacitor in the direct current side, to ensure that the cascaded H-bridge inverter operates stably. Preferably, the set value of the voltage across the capacitor in the direct current side is higher than the output voltage of the solar panel. In this case, the diode is switched off in a reverse direction, so that the solar panel is equivalently bypassed.

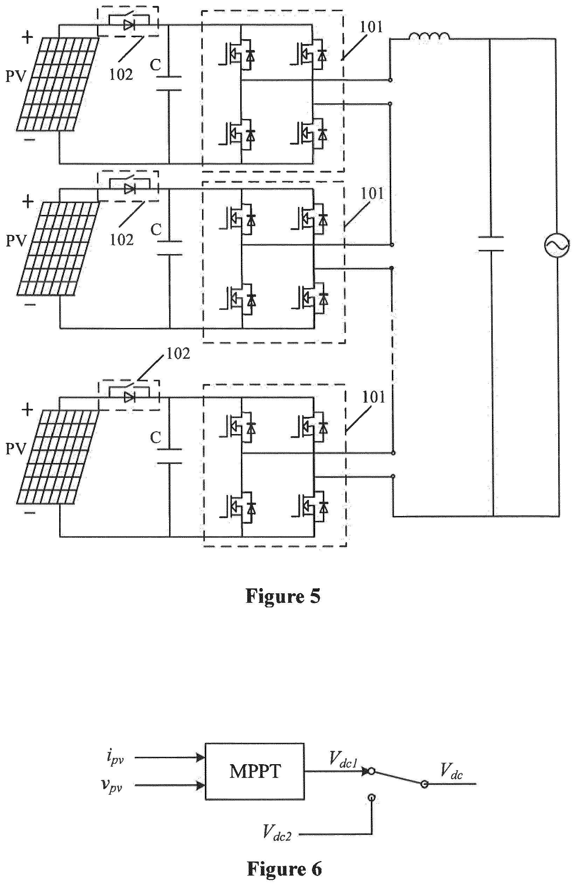

A cascaded H-bridge inverter is further provided according to another embodiment of the present disclosure. As shown in Figure 5, the cascaded H-bridge inverter is connected to N solar panels PV. The cascaded H-bridge inverter includes N capacitors C, N H-bridge modules 101, N switching devices 102 and a controller, where N is a positive integer. One output terminal of each of the solar panels PV is connected to one input terminal of one of the H-bridge modules 101 via one of the switching devices 102. The other output terminal of each of the solar panels PV is connected to the other input terminal of one of the H-bridge modules 101. Two input terminals of each of the H-bridge modules 101 are connected across a corresponding capacitor. Output terminals of the N H-bridge modules 101 are connected in series. The controller is respectively connected to the N switching devices 102, the N capacitors C and the N H-bridge modules 101.

As shown in Figure 5, by way of example, the switching device 102 is connected between a positive electrode of the solar panel PV and the H-bridge module 101. Alternatively, the switching device 102 may be connected between a negative electrode of the solar panel PV and the H-bridge module 101, and in this case, an installation direction of the switching device 102 is reversed as compared with that shown in Figure 5, both of which are within the scope of the present application, and which is not specifically limited herein.

The detailed operating principles are described below.

The controller detects an output voltage or an output power of each of the N solar panels PV. In a case that the output voltage of at least one of the N solar panels is lower than a preset voltage, or that the output power of at least one of the N solar panels is lower than a preset power, the controller controls a corresponding switching device 102 to be switched off, and changes a set value of a voltage across a corresponding capacitor in the direct current side. The controller controls a corresponding H-bridge module 101 to perform inverting by taking the set value of the voltage across the capacitor in the direct current side as an input value, so that a total output modulation voltage of the cascaded H-bridge inverter meets a preset condition of grid-connected power generation of the cascaded H-bridge inverter.

Based on the cascaded H-bridge inverter according to the embodiment, in a case that the output voltage of at least one of the N solar panels is lower than the preset voltage, or that the output power of at least one of the N solar panels is lower than the preset power, the controller controls the corresponding switching device 102 to be switched off, and changes the set value of the voltage across the corresponding capacitor in the direct current side. Then, the controller controls the corresponding H-bridge module 101 to perform inverting by taking the set value of the voltage across the capacitor in the direct current side as the input value, so that the total output modulation voltage of the cascaded H-bridge inverter meets the preset condition of grid-connected power generation of the cascaded H-bridge inverter, which avoids that the system cannot operate normally and stably and ensures that an intact solar panel can transfer energy to a power grid. Therefore, a significant loss of power generation is avoided.

Preferably, the controller is configured to control the corresponding switching device to be switched off and changing the set value of the voltage across the corresponding capacitor in the direct current side by controlling the corresponding switching device to be switched off, and controlling the set value of the voltage across the corresponding capacitor in the direct current side to be raised.

Preferably, the controller is further configured to control a corresponding H-bridge module to perform inverting based on a maximum power point tracking (MPPT) control strategy and control a corresponding switching device to be switched on, in a case that the output voltage of at least one of the solar panels is higher than the preset voltage, or that the output power of at least one of the solar panels is higher than the preset power.

The control strategy used by the N H-bridge modules 101 to perform inverting is as shown in Figure 6. In a normal operating state, each of the N H-bridge modules 101 performs inverting by taking, as an input value Vdc, a direct current voltage Vdc1 outputted based on the MPPT control strategy based on an output voltage Vpv and an output current Ipv of the respective solar panel PV.

In a case that the output voltage of at least one of the N solar panels is lower than the preset voltage, or that the output power of at least one of the N solar panels is lower than the preset power, the corresponding H-bridge module 101 perform inverting by taking the set value of the voltage Vdc2 across the capacitor in the direct current side as the input value Vdc, so that the total output modulation voltage of the cascaded H-bridge inverter meets the preset condition.

In a case that the equivalently bypassed solar panel PV restores to the normal operating state and can provide the output voltage meeting the requirement, the controller may control the corresponding H-bridge module 101 to restore to the normal operating state in which the H-bridge module 101 performs inverting based on the MPPT control strategy, and the controller may control the corresponding switching device 102 to be switched on.

Preferably, the controller is further configured to determine whether the cascaded H-bridge inverter is normally connected to the N solar panels PV. The controller is further configured to control the cascaded H-bridge inverter to enter into an operating state in a case that the cascaded H-bridge inverter is normally connected to the N solar panels PV, and control the N switching devices 102 to be switched on after the cascaded H-bridge inverter enters into the operating state.

Preferably, as shown in Figure 5, each of the switching devices 102 includes a diode and a full control switch. An anode of the diode is connected to a positive electrode of the corresponding solar panel, and a cathode of the diode is connected to the corresponding capacitor and the corresponding H-bridge module, as shown in Figure 5. Alternatively, the cathode of the diode is connected to a negative electrode of the corresponding solar panel, and the anode of the diode is connected to the corresponding capacitor and the corresponding H-bridge module. The full control switch is connected in parallel with the diode.

A connection direction of the diode is an installation direction of the switching device. As shown in Figure 5, the switching device is connected between the positive electrode of the solar panel and the H-bridge module. In a case that the switching device is connected between the negative electrode of the solar panel PV and the H-bridge module 101, the cathode of the diode is connected to the negative electrode of the corresponding solar panel, and the anode of the diode is connected to the corresponding capacitor and the corresponding H-bridge module, both of which are within the scope of the present application, with the implementation being determined according to the specific application environment.

Preferably, the full control switch is a relay or a semiconductor device.

The detailed operating principles of this embodiment are similar to the above embodiments, which are not repeated herein.

The embodiments of the present disclosure are described in a progressive manner and each embodiment places emphasis on the difference from other embodiments. Therefore, one embodiment can refer to other embodiments for the same or similar parts. Since the device according to the embodiment corresponds to the method disclosed in the embodiments, the description of the device is simple, and correlation parts can refer to the parts of the method.

## Claims

1. A method for handling a fault of a cascaded H-bridge inverter, comprising:
in the cascaded H-bridge inverter connected to N solar panels and comprising N capacitors, N H-bridge modules (101), N switching devices (102) and a controller, with N being a positive integer,
detecting (S101), by the controller, an output voltage or an output power of each of the N solar panels;
determining (S102), by the controller, whether the output voltage of at least one of the N solar panels is lower than a preset voltage, or whether the output power of at least one of the N solar panels is lower than a preset power;
controlling (S103) a corresponding one of the N switching devices (102) to be switched off and changing a set value of a voltage across a corresponding one of the N capacitors in the direct current side by the controller, in a case that the output voltage of at least one of the N solar panels is lower than the preset voltage, or that the output power of at least one of the N solar panels is lower than the preset power; and
controlling (S104), by the controller, a corresponding one of the N H-bridge modules (101) to perform inverting by taking the set value of the voltage across the capacitor in the direct current side as an input value, so that a total output modulation voltage of the cascaded H-bridge inverter meets a preset condition;
wherein the process of the controlling the corresponding switching device (102) to be switched off and changing the set value of the voltage across the corresponding capacitor in the direct current side by the controller comprises:
controlling, by the controller, the corresponding switching device (102) to be switched off; and
controlling, by the controller, the set value of the voltage across the corresponding capacitor in the direct current side to be raised, wherein the set value is raised to a value calculated based on the total output modulation voltage, which is needed by the cascaded H-bridge inverter to meet the preset condition, and wherein each H-bridge module (101) corresponding to a switching device (102) that is still switched on performs inverting based on a Maximum Power Point Tracking, MPPT, control strategy.

2. The method according to claim 1, wherein after the process of the controlling, by the controller, the corresponding H-bridge module (101) to perform inverting by taking the set value of the voltage across the capacitor in the direct current side as the input value, the method further comprises:
determining (S105), by the controller, whether the output voltage of at least one of the N solar panels is higher than the preset voltage, or whether the output power of at least one of the N solar panels is higher than the preset power; and
controlling (S106) a corresponding one of the N H-bridge modules (101) to perform inverting based on a maximum power point tracking control strategy and controlling a corresponding one of the N switching devices (102) to be switched on by the controller, in a case that the output voltage of at least one of the N solar panels is higher than the preset voltage, or that the output power of at least one of the N solar panels is higher than the preset power.

3. The method according to any one of claims 1 to 2, wherein before the process of the controlling the corresponding switching device (102) to be switched off and changing the set value of the voltage across the corresponding capacitor in the direct current side by the controller, the method further comprises:
determining (S201), by the controller, whether the cascaded H-bridge inverter is normally connected to the N solar panels;
controlling (S202), by the controller, the cascaded H-bridge inverter to enter into an operating state, in a case that the cascaded H-bridge inverter is normally connected to the N solar panels; and
controlling (S203), by the controller, the N switching devices (102) to be switched on.

4. A cascaded H-bridge inverter, connected to N solar panels and comprising N capacitors, N H-bridge modules (101), N switching devices (102) and a controller, with N being a positive integer, wherein
one output terminal of each of the N solar panels is connected to one input terminal of one of the N H-bridge modules (101) via one of the N switching devices (102);
the other output terminal of each of the N solar panels is connected to the other input terminal of one of the N H-bridge modules (101);
two input terminals of each of the N H-bridge modules (101) are connected across a corresponding one of the N capacitors;
output terminals of the N H-bridge modules (101) are connected in series; and
the controller is respectively connected to the N switching devices (102), the N capacitors and the N H-bridge modules (101), and the controller is configured to detect an output voltage or an output power of each of the N solar panels, control a corresponding one of the N switching devices (102) to be switched off and change a set value of a voltage across a corresponding one of the N capacitors in the direct current side in a case that the output voltage of at least one of the N solar panels is lower than a preset voltage, or that the output power of at least one of the N solar panels is lower than a preset power, and control a corresponding one of the N H-bridge modules (101) to perform inverting by taking the set value of the voltage across the capacitor in the direct current side as an input value, so that a total output modulation voltage of the cascaded H-bridge inverter meets a preset condition;
wherein the controller is configured to control the corresponding switching device (102) to be switched off and changing the set value of the voltage across the corresponding capacitor in the direct current side by
controlling the corresponding switching device (102) to be switched off; and
controlling the set value of the voltage across the corresponding capacitor in the direct current side to be raised, wherein the set value is calculated based on the total output modulation voltage, which is needed by the cascaded H-bridge inverter to meet the preset condition, and wherein each H-bridge module (101) corresponding to a switching device (102) that is still switched on performs inverting based on a Maximum Power Point Tracking, MPPT, control strategy.

5. The cascaded H-bridge inverter according to claim 4, wherein the controller is further configured to control a corresponding one of the N H-bridge modules (101) to perform inverting based on a maximum power point tracking control strategy and control a corresponding one of the N switching devices (102) to be switched on, in a case that the output voltage of at least one of the N solar panels is higher than the preset voltage, or that the output power of at least one of the N solar panels is higher than the preset power.

6. The cascaded H-bridge inverter according to claim 4, wherein the controller is further configured to determine whether the cascaded H-bridge inverter is normally connected to the N solar panels, control the cascaded H-bridge inverter to enter into an operating state in a case that the cascaded H-bridge inverter is normally connected to the N solar panels, and control the N switching devices (102) to be switched on after the cascaded H-bridge inverter enters into the operating state.

7. The cascaded H-bridge inverter according to any one of claims 5 to 6, wherein each of the N switching devices (102) comprises a diode and a full control switch,
an anode of the diode is connected to a positive electrode of a corresponding one of the N solar panels, and a cathode of the diode is connected to a corresponding one of the N capacitors and a corresponding one of the N H-bridge modules (101); or
a cathode of the diode is connected to a negative electrode of a corresponding one of the N solar panels, and an anode of the diode is connected to a corresponding one of the N capacitors and a corresponding one of the N H-bridge modules (101); and
the full control switch is connected in parallel with the diode.

8. The cascaded H-bridge inverter according to claim 7, wherein the full control switch is a relay or a semiconductor device.

## Patentansprüche

1. Verfahren zum Handhaben eines Fehlers eines kaskadierten H-Brücken-Wechselrichters, umfassend:
in dem kaskadierten H-Brücken-Wechselrichter, der mit N Solarpanels verbunden ist und N Kondensatoren, N H-Brücken-Module (101), N Schaltvorrichtungen (102) und eine Steuerung umfasst, wobei N eine positive ganze Zahl ist, Erfassen (S101) einer Ausgangsspannung oder einer Ausgangsleistung jedes der N Solarpanels durch die Steuerung;
Bestimmen (S102), durch die Steuerung, ob die Ausgangsspannung von mindestens einem der N Solarpanels niedriger als eine voreingestellte Spannung ist oder ob die Ausgangsleistung von mindestens einem der N Solarpanels niedriger als eine voreingestellte Leistung ist;
Steuern (S103) einer entsprechenden der auszuschaltenden N Schaltvorrichtungen (102) und Ändern eines eingestellten Wertes einer Spannung über einen entsprechenden der N Kondensatoren auf der Gleichstromseite durch die Steuerung, in einem Fall, dass die Ausgangsspannung von mindestens einem der N Solarpanels niedriger als die voreingestellte Spannung ist oder dass die Ausgangsleistung von mindestens einem der N Solarpanels niedriger als die voreingestellte Leistung ist; und
Steuern (S104) eines entsprechenden der N H-Brücken-Module (101) durch die Steuerung, um ein Wechselrichten durchzuführen, indem der eingestellte Wert der Spannung über den Kondensator auf der Gleichstromseite als ein Eingangswert genommen wird, so dass eine Gesamtausgangsmodulationsspannung des kaskadierten H-Brücken-Wechselrichters eine voreingestellte Bedingung erfüllt;
wobei der Prozess des Steuerns der entsprechenden auszuschaltenden Schaltvorrichtung (102) und des Änderns des eingestellten Wertes der Spannung über den entsprechenden Kondensator auf der Gleichstromseite durch die Steuerung umfasst:
Steuern der entsprechenden auszuschaltenden Schaltvorrichtung (102) durch die Steuerung; und
Steuern des eingestellten Wertes der Spannung über den entsprechenden Kondensator auf der Gleichstromseite, der angehoben werden soll, durch die Steuerung, wobei der eingestellte Wert auf einen Wert angehoben wird, der basierend auf der Gesamtausgangsmodulationsspannung berechnet wird, die von dem kaskadierten H-Brücken-Wechselrichter benötigt wird, um die voreingestellte Bedingung zu erfüllen, und wobei jedes H-Brücken-Modul (101) entsprechend einer Schaltvorrichtung (102), die noch eingeschaltet ist, ein Wechselrichten basierend auf einer "Maximum Power Point Tracking"-Steuerstrategie, MPPT control strategy, durchführt.

2. Verfahren nach Anspruch 1, wobei nach dem Prozess des Steuerns des entsprechenden H-Brücken-Moduls (101) durch die Steuerung, um ein Wechselrichten durchzuführen, indem der eingestellte Wert der Spannung über den Kondensator auf der Gleichstromseite als der Eingangswert genommen wird, das Verfahren ferner umfasst:
Bestimmen (S105), durch die Steuerung, ob die Ausgangsspannung von mindestens einem der N Solarpanels höher als die voreingestellte Spannung ist oder ob die Ausgangsleistung von mindestens einem der N Solarpanels höher als die voreingestellte Leistung ist; und
Steuern (S106) eines entsprechenden der N H-Brücken-Module (101), um ein Wechselrichten basierend auf einer "Maximum Power Point Tracking"-Steuerstrategie durchzuführen und Steuern einer entsprechenden der einzuschaltenden N Schaltvorrichtungen (102) durch die Steuerung, in einem Fall, dass die Ausgangsspannung von mindestens einem der N Solarpanels höher als die voreingestellte Spannung ist oder dass die Ausgangsleistung von mindestens einem der N Solarpanels höher als die voreingestellte Leistung ist.

3. Verfahren nach einem der Ansprüche 1 bis 2, wobei vor dem Prozess des Steuerns der entsprechenden auszuschaltenden Schaltvorrichtung (102) und des Änderns des eingestellten Wertes der Spannung über den entsprechenden Kondensator auf der Gleichstromseite durch die Steuerung das Verfahren ferner umfasst:
Bestimmen (S201), durch die Steuerung, ob der kaskadierte H-Brücken-Wechselrichter normal mit den N Solarpanels verbunden ist;
Steuern (S202) des kaskadierten H-Brücken-Wechselrichters durch die Steuerung, um in einen Betriebszustand einzutreten, in einem Fall, dass der kaskadierte H-Brücken-Wechselrichter normal mit den N Solarpanels verbunden ist; und
Steuern (S203) der einzuschaltenden N Schaltvorrichtungen (102) durch die Steuerung.

4. Kaskadierter H-Brücken-Wechselrichter, der mit N Solarpanels verbunden ist und N Kondensatoren, N H-Brücken-Module (101), N Schaltvorrichtungen (102) und eine Steuerung umfasst, wobei N eine positive ganze Zahl ist, wobei ein Ausgangsanschluss von jedem der N Solarpanels mit einem Eingangsanschluss eines der N H-Brücken-Module (101) über eine der N Schaltvorrichtungen (102) verbunden ist;
der andere Ausgangsanschluss von jedem der N Solarpanels mit dem anderen Eingangsanschluss eines der N H-Brücken-Module (101) verbunden ist; zwei Eingangsanschlüsse von jedem der N H-Brücken-Module (101) über einen entsprechenden der N Kondensatoren verbunden sind;
Ausgangsanschlüsse der N H-Brücken-Module (101) in Reihe geschaltet sind; und
die Steuerung entsprechend mit den N Schaltvorrichtungen (102), den N Kondensatoren und den N H-Brücken-Modulen (101) verbunden ist und die Steuerung dazu konfiguriert ist, eine Ausgangsspannung oder eine Ausgangsleistung jedes der N Solarpanels zu erfassen, eine entsprechende der auszuschaltenden N Schaltvorrichtungen (102) zu steuern und einen eingestellten Wert einer Spannung über einen entsprechenden der N Kondensatoren auf der Gleichstromseite zu ändern, in einem Fall, dass die Ausgangsspannung von mindestens einem der N Solarpanels niedriger als eine voreingestellte Spannung ist oder dass die Ausgangsleistung von mindestens einem der N Solarpanels niedriger als eine voreingestellte Leistung ist, und ein entsprechendes der N H-Brücken-Module (101) zu steuern, um ein Wechselrichten durchzuführen, indem der eingestellte Wert der Spannung über den Kondensator auf der Gleichstromseite als ein Eingangswert genommen wird, so dass eine Gesamtausgangsmodulationsspannung des kaskadierten H-Brücken-Wechselrichters eine voreingestellte Bedingung erfüllt;
wobei die Steuerung dazu konfiguriert ist, die entsprechende auszuschaltende Schaltvorrichtung (102) zu steuern und den eingestellten Wert der Spannung über den entsprechenden Kondensator auf der Gleichstromseite zu ändern durch
Steuern der entsprechenden auszuschaltenden Schaltvorrichtung (102); und Steuern des eingestellten Wertes der Spannung über den entsprechenden Kondensator auf der Gleichstromseite, der angehoben werden soll, wobei der eingestellte Wert basierend auf der Gesamtausgangsmodulationsspannung berechnet wird, die von dem kaskadierten H-Brücken-Wechselrichter benötigt wird, um die voreingestellte Bedingung zu erfüllen, und wobei jedes H-Brücken-Modul (101) entsprechend einer Schaltvorrichtung (102), die noch eingeschaltet ist, ein Wechselrichten basierend auf einer "Maximum Power Point Tracking"-Steuerstrategie, MPPT control strategy, durchführt.

5. Kaskadierter H-Brücken-Wechselrichter nach Anspruch 4, wobei die Steuerung ferner dazu konfiguriert ist, ein entsprechendes der N H-Brücken-Module (101) zu steuern, um ein Wechselrichten basierend auf einer "Maximum Power Point Tracking"-Steuerstrategie durchzuführen und eine entsprechende der einzuschaltenden N Schaltvorrichtungen (102) zu steuern, in einem Fall, dass die Ausgangsspannung von mindestens einem der N Solarpanels höher als die voreingestellte Spannung ist oder dass die Ausgangsleistung von mindestens einem der N Solarpanels höher als die voreingestellte Leistung ist.

6. Kaskadierter H-Brücken-Wechselrichter nach Anspruch 4, wobei die Steuerung ferner dazu konfiguriert ist, zu bestimmen, ob der kaskadierte H-Brücken-Wechselrichter normal mit den N Solarpanels verbunden ist, den kaskadierten H-Brücken-Wechselrichter zu steuern, um in einen Betriebszustand einzutreten, in einem Fall, dass der kaskadierte H-Brücken-Wechselrichter normal mit den N Solarpanels verbunden ist, und die einzuschaltenden N Schaltvorrichtungen (102) zu steuern, nachdem der kaskadierte H-Brücken-Wechselrichter in den Betriebszustand eingetreten ist.

7. Kaskadierter H-Brücken-Wechselrichter nach einem der Ansprüche 5 bis 6, wobei jede der N Schaltvorrichtungen (102) eine Diode und einen Vollsteuerschalter umfasst,
eine Anode der Diode mit einer positiven Elektrode von einem entsprechenden der N Solarpanels verbunden ist und eine Kathode der Diode mit einem entsprechenden der N Kondensatoren und einem entsprechenden der N H-Brücken-Module (101) verbunden ist; oder
eine Kathode der Diode mit einer negativen Elektrode von einem entsprechenden der N Solarpanels verbunden ist und eine Anode der Diode mit einem entsprechenden der N Kondensatoren und einem entsprechenden der N H-Brücken-Module (101) verbunden ist; und
der Vollsteuerschalter mit der Diode parallel geschaltet ist.

8. Kaskadierter H-Brücken-Wechselrichter nach Anspruch 7, wobei der Vollsteuerschalter ein Relais oder eine Halbleitervorrichtung ist.

## Revendications

1. Procédé pour traiter un défaut d'un onduleur de pont H en cascade, comprenant :
dans l'onduleur de pont H en cascade connecté à N panneaux solaires et comprenant N condensateurs, N modules de pont H (101), N dispositifs de commutation (102) et un contrôleur, N étant un entier positif,
la détection (S101), par le contrôleur, d'une tension de sortie ou d'une puissance de sortie de chacun des N panneaux solaires ;
la détermination (S102), par le contrôleur, de savoir si la tension de sortie d'au moins l'un des N panneaux solaires est inférieure à une tension prédéfinie, ou si la puissance de sortie d'au moins l'un des N panneaux solaires est inférieure à une puissance prédéfinie ;
la commande (S103) d'un correspondant des N dispositifs de commutation (102) à éteindre et modifier une valeur définie d'une tension à travers un correspondant des N condensateurs du côté courant continu par le contrôleur, dans le cas où la tension de sortie d'au moins l'un des N panneaux solaires serait inférieure à la tension prédéfinie, ou que la puissance de sortie d'au moins l'un des N panneaux solaires est inférieure à la puissance prédéfinie ; et
la commande (S104), par le contrôleur, d'un correspondant des N modules de pont H (101) pour effectuer une inversion en prenant la valeur définie de la tension à travers le condensateur du côté courant continu en tant que valeur d'entrée, si bien qu'une tension de modulation de sortie totale de l'onduleur de pont H en cascade remplit une condition prédéfinie ;
dans lequel le processus de commande du dispositif de commutation correspondant (102) à éteindre et modifier la valeur définie de la tension à travers le condensateur correspondant du côté courant continu par le contrôleur comprend :
la commande, par le contrôleur, du dispositif de commutation correspondant (102) à éteindre ; et
commander, par le contrôleur, la valeur définie de la tension à travers le condensateur correspondant du côté courant continu à augmenter, la valeur définie étant augmentée à une valeur calculée sur la base de la tension de modulation de sortie totale nécessaire pour l'onduleur de pont H en cascade pour remplir la condition prédéfinie, et chaque module de pont H (101) correspondant à un dispositif de commutation (102) qui reste allumé effectue une inversion basée sur une stratégie de commande de recherche du point de puissance maximum (MPPT, Maximum Power Point Tracking).

2. Procédé selon la revendication 1, dans lequel après le processus de commande, par le contrôleur, du module de pont H correspondant (101) à effectuer une inversion en prenant la valeur définie de la tension à travers le condensateur du côté courant continu en tant que valeur d'entrée, le procédé comprend en outre :
la détermination (S105), par le contrôleur, de savoir si la tension de sortie d'au moins l'un des N panneaux solaires est supérieure à la tension prédéfinie, ou si la puissance de sortie d'au moins l'un des N panneaux solaires est supérieure à la puissance prédéfinie ; et
la commande (S106) d'un correspondant des N modules de pont H (101) à effectuer une inversion sur la base d'une stratégie de commande de recherche du point de puissance maximum et la commande d'un correspondant des N dispositifs de commutation (102) à allumer par le contrôleur, dans un cas où la tension de sortie d'au moins l'un des N panneaux solaires serait supérieure à la tension prédéfinie, ou que la puissance de sortie d'au moins l'un des N panneaux solaires est supérieure à la puissance prédéfinie.

3. Procédé selon l'une quelconque des revendications 1 à 2, dans lequel avant le processus de commande du dispositif de commutation correspondant (102) à éteindre et modifier la valeur prédéfinie de la tension à travers le condensateur correspondant du côté courant continu par le contrôleur, le procédé comprend en outre :
la détermination (S201), par le contrôleur, de savoir si l'onduleur de pont H en cascade est normalement connecté aux N panneaux solaires ;
la commande (S202), par le contrôleur, de l'onduleur de pont H en cascade à entrer dans un état de fonctionnement, dans le cas où l'onduleur de pont H en cascade serait normalement connecté aux N panneaux solaires ; et
la commande (S203), par le contrôleur, des dispositifs de commutation (102) à allumer.

4. Onduleur de pont H en cascade, connecté à N panneaux solaires et comprenant N condensateurs, N modules de pont H (101), N dispositifs de commutation (102) et un contrôleur, N étant un entier positif, dans lequel une borne de sortie de chacun des N panneaux solaires est connectée à une borne d'entrée de l'un des N modules de pont H (101) via l'un des N dispositifs de commutation (102) ;
l'autre borne de sortie de chacun des N panneaux solaires est connectée à l'autre borne d'entrée de l'un des N modules de pont H (101) ;
deux bornes d'entrée de chacun des N modules de pont H (101) sont connectées à travers l'un correspondant des N condensateurs ;
les bornes de sortie des N modules de pont H (101) sont connectées en série ; et
le contrôleur est connecté respectivement aux N dispositifs de commutation (102), aux N condensateurs et aux N modules de pont H (101), et le contrôleur est configuré pour détecter une tension de sortie ou une puissance de sortie de chacun des N panneaux solaires, commander l'un correspondant des N dispositifs de commutation (102) à éteindre et modifier une valeur définie d'une tension à travers l'un des N condensateurs correspondant du côté courant continu dans le cas où la tension de sortie d'au moins l'un des N panneaux solaires est inférieure à une tension prédéfinie, ou que la puissance de sortie d'au moins un des N panneaux solaires est inférieure à une puissance prédéfinie, et commander l'un correspondant des N modules de pont H (101) à effectuer une inversion en prenant la valeur définie de la tension à travers condensateur du côté courant continu en tant que valeur d'entrée, si bien qu'une tension de modulation de sortie totale de l'onduleur de pont H en cascade remplit une condition prédéfinie ;
dans lequel le contrôleur est configuré pour commander le dispositif de commutation correspondant (102) à éteindre et modifier la valeur définie de la tension à travers le condensateur correspondant du côté courant continu en commandant le dispositif de commutation correspondant (102) à être éteint ; et
commandant la valeur définie de la tension à travers le condensateur correspondant du côté courant continu à augmenter, la valeur définie étant calculée sur la base de la tension de modulation de sortie totale nécessaire pour l'onduleur de pont H en cascade pour remplir la condition prédéfinie, et chaque module de pont H (101) correspondant à un dispositif de commutation (102) qui reste allumé effectue une inversion basée sur une stratégie de commande de recherche du point de puissance maximum (MPPT, Maximum Power Point Tracking).

5. Onduleur de pont H en cascade selon la revendication 4, dans lequel le contrôleur est en outre configuré pour commander l'un correspondant des N modules de pont H (101) à effectuer une inversion sur la base d'une stratégie de commande de recherche du point de puissance maximum et commander l'un correspondant des N dispositifs de commutation (102) à allumer, dans le cas où la tension de sortie d'au moins un des N panneaux solaires serait supérieure à la tension prédéfinie, ou que la puissance de sortie d'au moins un des N panneaux solaires est supérieure à la puissance prédéfinie.

6. Onduleur de pont H en cascade selon la revendication 4, dans lequel le contrôleur est en outre configuré pour déterminer si l'onduleur de pont H en cascade est normalement connecté aux N panneaux solaires, commander l'onduleur de pont H en cascade à entrer dans un état de fonctionnement dans un dans le cas où l'onduleur de pont H en cascade serait normalement connecté aux N panneaux solaires, et commander les N dispositifs de commutation (102) à allumer après que l'onduleur de pont H en cascade entre dans l'état de fonctionnement.

7. Onduleur de pont H en cascade selon l'une quelconque des revendications 5 à 6, dans lequel chacun des N dispositifs de commutation (102) comprend une diode et un commutateur de commande complet,
une anode de la diode est connectée à une électrode positive de l'un correspondant des N panneaux solaires, et une cathode de la diode est connectée à l'un correspondant des N condensateurs et à l'un correspondant des N modules de pont de H (101) ; ou
une cathode de la diode est connectée à une électrode négative de l'un correspondant des N panneaux solaires, et une anode de la diode est connectée à un correspondant des N condensateurs et un correspondant des N modules de pont en H (101) ; et
le commutateur de commande complet est connecté en parallèle avec la diode.

8. Onduleur de pont H en cascade selon la revendication 7, dans lequel le commutateur de commande complet est un relais ou un dispositif semi-conducteur.
